Europäisches Patentamt

European Patent Office

Office européen des brevets

(11) Numéro de publication: **0 234 161 B1**

# (12) FASCICULE DE BREVET EUROPEEN

(45) Date de publication de fascicule du brevet: **01.04.92**  (51) Int. Cl.⁵: **H02G 15/103**

(21) Numéro de dépôt: **86402950.9**

(22) Date de dépôt: **29.12.86**

(54) **Dispositif pour relier deux câbles électriques isolés comportant des moyens perfectionnés de protection extérieure de la jonction.**

(30) Priorité: **22.01.86 FR 8600850**

(43) Date de publication de la demande:
**02.09.87 Bulletin  87/36**

(45) Mention de la délivrance du brevet:
**01.04.92 Bulletin  92/14**

(84) Etats contractants désignés:
**DE ES GB IT**

(56) Documents cités:
**FR-A- 2 436 519
LU-A- 80 162
US-A- 3 777 050
US-A- 4 314 093**

(73) Titulaire: **CABLES PIRELLI
1, rue des Usines
F-94410 Saint Maurice(FR)**

(72) Inventeur: **Courty, Jean-Louis Roland
1 place des Châtaigniers
F-77230 Dammartin en Goele(FR)**
Inventeur: **David, Philippe, Clément André
69bis Boulevard de la Marne
F-94210 La Varenne(FR)**

(74) Mandataire: **Lhuillier, René et al
ARMENGAUD JEUNE CABINET LEPEUDRY 52,
avenue Daumesnil
F-75012 Paris(FR)**

Rank Xerox (UK) Business Services

## Description

L'invention est relative à un dispositif pour relier deux câbles électriques isolés notamment dans le domaine de la moyenne tension, comportant des moyens perfectionnés de protection extérieure de la jonction.

Un dispositif pour relier deux câbles électriques isolés comprend, de façon connue en soi, des moyens de raccordement des âmes conductrices des câbles, des moyens de raccordement de leurs couches d'isolement respectives, et éventuellement des moyens de raccordement de leurs écrans conducteurs lorsque ces câbles en possèdent.

Un des problèmes posés par l'utilisation d'un tel dispositif est d'assurer une protection d'ensemble de celui-ci pour obtenir notamment l'étanchéité de la jonction entre câbles, et le cas échéant, la protection mécanique des moyens de raccordement des écrans conducteurs. Le diamètre de la jonction étant sensiblement plus important que celui des câbles, il est difficile de prévoir un manchon de protection d'une seule pièces s'appliquant fermement à la fois sur la jonction et sur les câbles.

Dans la technique connue, on est ainsi amené à réaliser une protection et une étanchéité indépendante pour les extrémités des deux câbles, et éventuellement une protection complémentaire de la jonction, ce qui est long, coûteux et multiplie de façon correspondante les risques de défaillance.

Un autre problème posé est le positionnement précis des manchons de protection sur la jonction : actuellement, ces manchons sont montés sur la jonction manuellement et de façon approximative.

Aussi, un des buts de l'invention est de proposer un dispositif pour relier deux câbles électriques isolés, dont les moyens de protection extérieure de la jonction sont assemblés de façon simple et assurent une continuité de la protection, depuis l'extrémité à relier de l'un des câbles jusqu'à celle de l'autre câble.

Un autre but de l'invention est de proposer un corps de jonction pour relier deux câbles électriques isolés, qui permet d'obtenir facilement une telle protection et d'assurer son positionnement précis.

Le document US-A-4 314 093 divulgue un dispositif de raccordement de câbles comprenant deux capots recouvrant respectivement les extrémités des deux câbles à réunir, et coopérant par encliquetage avec la couche semi-conductrice 12 d'un manchon de raccordement. Il n'est pas prévu d'écran conducteur externe, ni d'enveloppe protégeant un tel écran.

Le document FR-A-2 436 519 divulgue un dispositif de raccordement conforme au préambule de la revendication 1. Il n'est pas prévu de capots d'extrémité de câble, de sorte que les extrémités de câble ne sont protégées que par un prolongement d'une enveloppe de protection recouvrant un manchon de raccordement entre les câbles.

L'invention concerne un dispositif pour relier deux câbles électriques, conforme au préambule de la revendication 1 et caractérisé en ce qu'il comporte en outre deux capots de protection qui sont montés respectivement aux extrémités des deux câbles et qui s'appliquent de façon étanche sur lesdites gaines de protection des câbles, ladite enveloppe de protection et lesdits capots de protection comprenant des moyens d'encliquetage mutuel étanche.

L'invention concerne aussi un corps de jonction pour relier deux câbles électriques isolés, comprenant un fourreau comportant au moins une couche d'isolement, un écran conducteur entourant ledit fourreau et dépassant aux deux extrémités de ce dernier, et une enveloppe de protection qui recouvre ledit écran conducteur, caractérisé en ce que l'enveloppe de protection recouvre l'écran conducteur à l'exception des extrémités de ce dernier, et elle porte, sur sa surface extérieure et à ses deux extrémités, des moyens d'encliquetage étanche pour des capots de protection d'extrémité de câble.

La description qui suit, et qui ne présente aucun caractère limitatif, doit être lue en regard des figures, parmi lesquelles :

La figure 1 est une vue en coupe longitudinale, d'un corps de jonction selon l'invention.

La figure 2 est une demi-vue, en coupe longitudinale partielle d'un dispositif de jonction de câbles utilisant le corps de jonction de la figure 1.

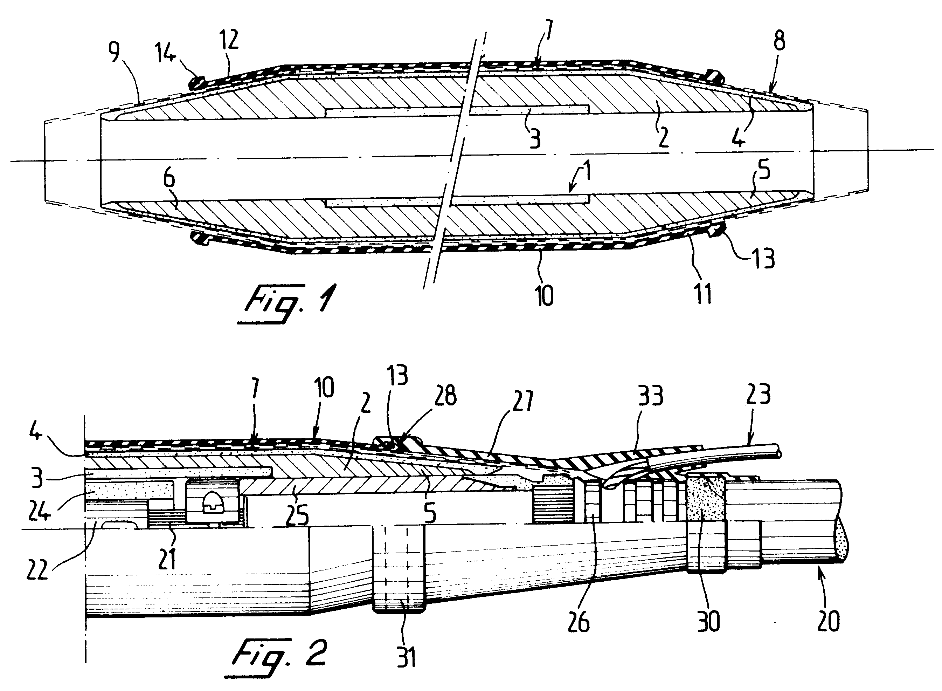

Le corps de jonction de la figure 1 comprend un fourreau 1 qui est composé, de façon connue en soi, d'une couche isolante principale 2 interposée entre une couche semi-conductrice interne 3 et une couche semi-conductrice externe 4. Le fourreau 1 se présente sous la forme d'un tube circulaire dont les deux extrémités 5,6 sont profilées extérieurement en tronc de cône de façon à présenter une section progressivement réduite.

Un écran métallique, sous la forme d'une tresse tubulaire 7, recouvre extérieurement le fourreau 1 et se prolonge au-delà des extrémités 5,6 du fourreau. Toutefois, la tresse 7 est rebroussée sur le fourreau 1, de façon que ses extrémités 8,9 prennent appui sur lui, au niveau des extrémités en tronc de cône 5,6 de ce fourreau.

Une enveloppe de protection sous la forme d'un tube protecteur 10 en élastomère recouvre le fourreau 1 et la tresse 7 en s'appliquant à force sur eux, de façon à maintenir la tresse 7 en position sur le fourreau. Le tube protecteur 10 ne s'étend pas sur toute la longueur du fourreau 1 : ses extrémités 11,12 sont situées au droit d'une zone médiane des extrémités 5,6 en tronc de cône du fourreau 1. Chaque extrémité 11,12 du tube protecteur 10 comporte un rebord circulaire 13,14 s'étendant radialement vers l'extérieur.

En variante au mode de réalisation de la figure 1, l'écran métallique peut être constitué par un feuillard. Le tube protecteur est d'une façon générale élastique, thermorétractable ou mécanicorétractable. Il peut même être conçu en un matériau rigide tel qu'un matériau plastique.

De préférence le corps de jonction de la figure 1 est pré-assemblé en usine avant d'être employé sur site. Le tube protecteur 10 en élastomère de la figure 1 est monté sur le fourreau 1 par exemple au moyen d'une cage cylindrique à vide : après introduction du tube protecteur 10 dans cette cage on établit le vide pour provoquer la dilatation de ce tube. On dispose alors le fourreau 1 revêtu de la tresse 7 à l'intérieur du tube protecteur 10, puis on supprime le vide ce qui provoque la rétractation du tube sur le fourreau.

Selon un procédé de montage plus simple, on applique une colle lubrifiante à la surface extérieure du fourreau 1 et l'on ramène par glissement le tube protecteur 10 en élastomère sur le fourreau 1.

On notera que la tresse 7 et le tube protecteur 10 peuvent être ainsi positionnés avec précision par des moyens mécaniques, ce qui facilitera l'assemblage du dispositif de jonction sur le site.

La figure 2 représente un dispositif de jonction selon l'invention qui comprend notamment le corps de jonction de la figure 1, recouvrant une jonction symétrique entre deux câbles, dont un seul 20 est visible sur cette figure. La description de la jonction se limitera donc à la partie visible sur la figure 2, cette description valant pour la partie symétrique.

De façon connue en soi, l'âme 21 du câble 20 est réunie à celle de l'autre câble au moyen d'un manchon de raccordement 22. Un conducteur de terre isolé 23 est relié à l'écran métallique du câble 20.

Le corps de jonction, qui comprend la couche semi-conductrice interne 3, la couche isolante 2, la couche semi-conductrice externe 4, la tresse 7 et le tube protecteur 10, recouvre la jonction à l'exception du conducteur de terre 23. Les couches isolante 2 et semi-conductrices 3,4 du corps de jonction sont, de façon connue en soi, en contact avec les couches correspondantes du câble 20, avec interposition -dans cet exemple- de douilles 24, 25 permettant d'adapter le diamètre intérieur du corps de jonction au diamètre extérieur du câble 20.

La tresse 7 est reliée à l'écran métallique du câble 20 au moyen d'un collier 26. Un capot de protection sous la forme d'un capot tubulaire 27 recouvre l'extrémité du câble 20 et l'extrémité en tronc de cône du corps de jonction. Le capot tubulaire 27 est en élastomère. Il présente lui-même une extrémité élargie en tronc de cône, laquelle porte un bourrelet circulaire 31 à l'intérieur duquel est pratiquée une gorge circulaire 28. La gorge 28 coiffe de façon étanche et par encliquetage le rebord circulaire 13 du tube protecteur 10 du corps de jonction. L'autre extrémité du capot tubulaire 27 s'applique sur la gaine du câble 20 avec interposition d'un mastic d'étanchéité 30. Le conducteur de terre 23 sort latéralement du capot tubulaire 27 en traversant une saillie tubulaire 33 solidaire du capot et s'étendant vers l'extérieur de celui-ci : la surface intérieure de cette saillie tubulaire 33 s'applique de façon étanche sur le conducteur de terre 23.

Dans un mode de réalisation simplifié, le mastic d'étanchéité 30 peut être supprimé, le capot tubulaire 27 étant appliqué à force sur la gaine du câble 20 et assurant en soi une étanchéité.

Lors du montage de la jonction sur chantier, le corps de jonction - de préférence assemblé en usine - est enfilé sur l'un des câbles 20, après que le capot tubulaire 27 ait été lui-même enfilé. Un capot tubulaire est également enfilé sur l'autre câble Après raccordement des âmes des câbles et mise en place des douilles 24, 25, le corps de jonction est ramené sur la jonction ; les capots tubulaires sont alors ramenés à leur tour et viennent s'encliqueter sur le tube protecteur 10 du corps de jonction.

Le positionnement relatif des différents composants de la jonction s'effectue de soi-même : la tresse 7 et le tube protecteur 10 sont déjà montés sur le fourreau, et donc déjà positionnés. Quant aux capots tubulaires, ils sont positionnés de façon précise au moyen des rebords 13, 14 du fourreau sur lesquels ils viennent s'encliqueter.

De l'extrémité d'un câble à l'extrémité de l'autre câble, la protection constituée par les deux capots tubulaires 27 et par le tube protecteur 1 est continue.

Naturellement les moyens d'encliquetage mutuel entre capots tubulaires 27 et tube protecteur 10 ne sont pas limités à ceux décrits et peuvent prendre diverses formes, à condition que la liaison obtenue soit étanche sur toute la périphérie de la jonction.

L'invention trouve notamment son application dans la réalisation de jonctions de câbles électriques souterrains, en moyenne tension.

**Revendications**

1. Dispositif pour relier deux câbles électriques isolés (20) comportant chacun au moins une âme conductrice (21), une couche d'isolement de cette âme, un écran conducteur périphérique et une gaine de protection de cet écran conducteur, ce dispositif comprenant des moyens de raccordement (22) desdites âmes conductrices (21), des moyens de raccordement (2) desdites couches d'isolement, des moyens de raccordement (7) desdits écrans conducteurs, et une enveloppe de protection (10) recouvrant lesdits moyens de raccordement (7) des écrans conducteurs, caractérisé en ce qu'il comporte en outre deux capots de protection (27) qui sont montés respectivement aux extrémités des deux câbles et qui s'appliquent de façon étanche sur lesdites gaines de protection des câbles, ladite enveloppe de protection (10) et lesdits capots de protection (27) comprenant des moyens d'encliquetage mutuel étanche (13, 28).

2. Dispositif selon la revendication 1, caractérisé en ce que ladite enveloppe de protection (10) et lesdits capots de protection (27) sont en un matériau élastique et s'appliquent à force, respectivement sur lesdits moyens de raccordement (7) des écrans conducteurs et sur lesdites gaines de protection.

3. Dispositif selon la revendication 1 ou la revendication 2, caractérisé en ce que lesdits moyens d'encliquetage comprennent d'une part une gorge périphérique (28) et d'autre part un rebord périphérique (13) qui est logé dans ladite gorge périphérique (28).

4. Dispositif selon l'une quelconque des revendications précédentes, caractérisé en ce que lesdits moyens de raccordement desdits écrans conducteurs comprennent une tresse métallique (7) qui entoure lesdits moyens de raccordement (2) des couches d'isolement et dont les deux extrémités (8, 9) sont rebroussées sur ces moyens de raccordement (2) de façon à être maintenues entre eux et ladite enveloppe de protection (10).

5. Dispositif selon l'une quelconque des revendications précédentes, caractérisé en ce que chaque capot de protection (27) susdit comporte une ouverture (33) pratiquée dans sa paroi latérale, la surface délimitant ladite ouverture s'appliquant de façon étanche sur un conducteur de terre (23) qui traverse ladite ouverture et qui est relié à l'écran conducteur du câble correspondant.

6. Corps de jonction pour relier deux câbles électriques isolés, comprenant un fourreau (1) comportant au moins une couche d'isolement (2), un écran conducteur (7) entourant ledit fourreau (1) et dépassant aux deux extrémités de ce dernier, et une enveloppe de protection (10) qui recouvre ledit écran conducteur (7), caractérisé en ce que l'enveloppe de protection (10) recouvre l'écran conducteur (7) à l'exception des extrémités (8, 9) de ce dernier, et elle porte, sur sa surface extérieure et à ses deux extrémités, des moyens d'encliquetage étanche (13, 14) pour des capots de protection d'extrémité de câble.

7. Corps de jonction selon la revendication 6, caractérisé en ce que ladite enveloppe de protection est en un matériau élastique et s'applique à force sur ledit écran conducteur.

8. Corps de jonction selon la revendication 6 ou la revendication 7, caractérisé en ce que ledit écran conducteur comprend une tresse métallique (7) dont les deux extrémités son rebroussées sur ledit fourreau (1) et sont maintenues entre celui-ci et ladite enveloppe de protection (10).

9. Corps de jonction selon l'une quelconque des revendications 6 à 8, caractérisé en ce que ledit fourreau (1) comprend une couche isolante (2) interposée entre deux couches semi-conductrices (3, 4).

**Claims**

1. Device for connecting together two insulated electric cables (20) each comprising at least one conducting core (21), an insulating layer for the core, a peripheral conducting screen and a protective sheath for the conducting screen, the device including means (22) for connecting said conducting cores (21) together, means (2) for connecting said insulating layers together, means(7) for connecting said conducting screens together, and a protective envelope (10) covering said means (7) for connecting the conducting screens together, characterized in that the device further comprises two protective caps (27) which are mounted respectively at the ends of the two cables and which are sealingly applied against said protective sheaths of the cables, said protective envelope (10) and said protective caps (27) including mutually sealing snap fit means (13, 28).

2. Device according to claim 1, characterised in that said protective envelope (10) and said protective caps (27) are made of a resilient material and are force fitted, respectively, on said means (7) for connecting the conducting screens together and on said protective sheaths.

3. Device according to claim 1 or claim 2, characterized in that said snap fit means include on the one part a peripheral groove (28) and on the other part a peripheral flange (13) which is engaged in said peripheral groove (28).

4. Device according to any one of the preceding claims, characterised in that said means for connecting said conducting screens together include a metal braid (7) which surrounds said means (2) for connecting said insulating layers together and whose two ends (8,9) are bent back over the connecting means (2) so as to be held between them and said protective envelope (10).

5. Device according to any one of the preceding claims, characterised in that each said protective cap (27) comprises an opening (33) formed in its side wall, the surface defining said opening being sealingly applied against an earth conductor (23) which passes through said opening and which is connected to the conducting screen of the corresponding cable.

6. Junction body for connecting together two insulated electric cables, including a sheath(1) having at least one insulating layer (2), a conducting screen (7) surrounding said sheath (1) and projecting beyond the two ends thereof, and a protective envelope (10) which covers said conducting screen (7), characterised in that the protective envelope (10) covers the conducting screen (7) except for the ends (8, 9) thereof, and has on its outer surface and at its two ends, sealing snap fit means (13, 14) for cable end protective caps.

7. Junction body according to claim 6, characterised in that said protective envelope is made of a resilient material and is force fitted on said conducting screen.

8. Junction body according to claim 6 or claim 7, characterised in that said conductive screen comprises a metal braid (7) whose two ends are bent back on said sheath (1) and are held between it and said protective envelope (10).

9. Junction body accordingly to any one of claims 6 to 8, characterised in that said sheath (1) includes an insulating layer (2) interposed between two semi-conductive layers (3, 4).

**Patentansprüche**

1. Vorrichtung zum Verbinden von zwei isolierten elektrischen Kabeln (20), die jeweils mindestens einen elektrischen Leiter, eine Isolierschicht dieses elektrischen Leiters, einen leitenden peripheren Mantel und eine Schutzhülle dieses leitenden Mantels aufweisen, wobei die Vorrichtung Mittel für die Verbindung (22) der genannten elektrischen Leiter (21), Mittel für die Verbindung (2) der genannten Isolierschichten, Mittel für die Verbindung (7) der genannten leitenden Mäntel und eine Schutzumhüllung (10) aufweist, die die Mittel für die Verbindung (7) der leitenden Mäntel umgibt, dadurch gekennzeichnet, daß sie weiterhin zwei Schutzkappen (27) hat, die jeweils an den Extremitäten der beiden Kabel montiert sind und sich in dichtender Anlage an den genannten Schutzhüllen der Kabel befinden, und daß die genannte Schutzumhüllung (10) und die genannten Schutzkappen (27) Mittel für ein wechselseitiges, abgedichtetes Einklippsen (13, 28) aufweisen.

2. Vorrichtung nach Anspruch 1, dadurch gekennzeichnet, daß die genannte Schutzumhüllung (10) und die genannten Schutzkappen (27) aus einem elastischen Material gefertigt sind und sich jeweils in kraftschlüssiger Anlage auf den genannten Mitteln für die Verbindung (7) der leitenden Mäntel und der genannten Schutzhülle befinden.

3. Vorrichtung nach Anspruch 1 oder 2, dadurch gekennzeichnet, daß die genannten Mittel für ein Einklippsen einerseits eine periphere Kehlung (28) und andererseits einen peripheren Vorsprung (13), der in der genannten peripheren Kehlung (28) angeordnet ist, auweisen.

4. Vorrichtung nach einem der vorgenannten Ansprüche, dadurch gekennzeichnet, daß die genannten Verbindungsmittel der leitenden Mäntel eine metallische Tresse (7) aufweisen, die die genannten Mittel für eine Verbindung (2) der Isolierschichten umgibt und deren beide Endbereiche (8, 9) derart in die Gegenrichtung auf die Mittel für die Verbindung (2) umgeschlagen sind, daß sie zwischen diesen und der genannten Schutzumhüllung (10) gehalten sind.

5. Vorrichtung nach einem der vorgenannten Ansprüche, dadurch gekennzeichnet, daß jede oben genannte Schutzkappe (22) eine in ihre Seitenwand eingearbeitete Öffnung (33) hat, und daß die diese Öffnung begrenzende Oberfläche sich abdichtend auf einen Erdleiter (23) anlegt, der durch die genannte Öffnung verläuft und verbunden ist mit dem leitenden Mantel des korrespondierenden Kabels.

6. Verbindergehäuse für die Verbindung von zwei isolierten elektrischen Kabeln, das eine Hülse (1) aufweist, die mindestens eine Isolierschicht (2), einen leitenden Mantel (7), der diese Hülse (1) umgibt und sie an ihren beiden Endbereichen überragt, und eine Schutzumhüllung (10) aufweist, die den leitenden Mantel (7) umgibt, dadurch gekennzeichnet, daß die Schutzumhüllung (10) den leitenden Mantel (7) mit Ausnahme der Endbereiche (8, 9) des letzteren umgibt und daß sie auf ihrer äußeren Oberfläche und an ihren beiden Endbereichen abdichtende Mittel für ein Einklippsen (13, 14) von Schutzkappen der Kabelendbereiche trägt.

7. Verbindergehäuse nach Anspruch 6, dadurch gekennzeichnet, daß die genannte Schutzumhüllung aus einem elastischen Material besteht und kraftschlüssig auf dem genannten leitenden Mantel anliegt.

8. Verbindergehäuse nach Anspruch 6 oder 7, dadurch gekennzeichnet, daß der genannte leitende Mantel eine metallische Tresse (7) aufweist, deren beide Endbereiche auf die Hülse (1) zurückgelegt und zwischen dieser und der genannten Schutzumhüllung (10) festgelegt sind.

9. Verbindergehäuse nach einem der Ansprüche 6 bis 8, dadurch gekennzeichnet, daß die genannte Hülse (1) eine isolierende Schicht (2) aufweist, die zwischen zwei halbleitenden Schichten (3, 4) angeordnet ist.

EP 0 234 161 B1

Fig. 1

Fig. 2